**Europäisches Patentamt**

**European Patent Office**

**Office européen des brevets**

(19)

(11) Veröffentlichungsnummer: **0 490 415 B1**

(12)
# EUROPÄISCHE PATENTSCHRIFT

(45) Veröffentlichungstag der Patentschrift: **02.11.94**

(51) Int. Cl.5: **B09B 3/00**, B03D 1/02, B03D 1/004

(21) Anmeldenummer: **91202886.7**

(22) Anmeldetag: **07.11.91**

(54) **Verfahren zur Aufbereitung von kontaminierten Böden.**

(30) Priorität: **07.12.90 DE 4039109**

(43) Veröffentlichungstag der Anmeldung:
**17.06.92 Patentblatt 92/25**

(45) Bekanntmachung des Hinweises auf die
Patenterteilung:
**02.11.94 Patentblatt 94/44**

(84) Benannte Vertragsstaaten:
**AT BE CH DE DK ES FR GB IT LI LU NL SE**

(56) Entgegenhaltungen:
**EP-A- 0 251 562
EP-A- 0 313 116
GB-A- 2 072 700
GB-A- 2 093 735
US-A- 4 336 136**

(73) Patentinhaber: **METALLGESELLSCHAFT Aktiengesellschaft
Postfach 10 15 01,
Reuterweg 14
D-60015 Frankfurt (DE)**

(72) Erfinder: **Rosenstock, Friedrich
Alt-Bornheim 7-9
W-6000 Frankfurt am Main 60 (DE)**
Erfinder: **Güntner, Jochen
Magdeburger Strasse 2
W-8756 Kahl (DE)**
Erfinder: **Haite, Elmar
de Bary Strasse 5
W-6000 Frankfurt am Main (DE)**
Erfinder: **Dittmann, Horst
In den Weihern 1
W-6470 Büdingen 2 (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Verfahren zur Aufbereitung von kontaminierten Böden durch Trennen einer wäßrigen Aufschlämmung des Bodens in Grobkorn- und Feinkornfraktion, Behandlung der Feinkornfraktion in einer Flotation, Entwässerung des Schaumproduktes und Abführung als Schadstoffkonzentrat, und Entwässerung des Unterlaufes der Flotation und Abführung als gereinigter Boden.

Die Dekontaminierung von Böden oder Halden, die durch Kohlenwasserstoffe, Öl und/oder Schwermetalle verunreinigt sind, ist sehr aufwendig. Deshalb wird auch vorgeschlagen, durch eine Aufbereitung diese Böden in einen nicht oder nur gering verunreinigten Teil und einen Teil zu trennen, der den größten Teil der Verunreinigungen in konzentrierter Form enthält. Die Dekontaminierung dieses Teiles ist dann wesentlich billiger und einfacher.

Aus J.E. Garnett, D.L. Mitchell, T.T. Faccini "Initial Testing of Pilot Equipment for Soil Decontamination", REP-3022, PIC-4500, DE-AC 04-76 DP 03533, U.S. Dept. of Energy, Oct. 17, 1980, ist es bekannt, durch plutoniumbeladenes Öl verunreinigte Böden durch ein nasse Aufbereitung zu behandeln. Dabei werden die feinkörnigen Bodenbestandteile, mit denen das Plutonium assoziiert ist, von den gröberen Bestandteilen abgetrennt. Der Boden wird zunächst in einem Trommelwäscher behandelt, in dem trockene Aggregate aufgebrochen und Öl von Kies und grobem Sand abgewaschen werden. Die Wäsche erfolgt mit einer wässrigen NaOH-Lösung mit pH 11. Zur besseren Agitation der Aufschlämmung ist die Trommel mit kleinen Schaufeln ausgerüstet. Die Trommel ist am Austrag mit einem Sieb versehen, das rund 50% als Überkorn plus 4 mm abstößt. Das Unterkorn wird auf einem Sieb bei 0,5 mm Korngröße abgesiebt und die Fraktion plus 0,5 mm abgestoßen. Die Fraktion minus 0,5 mm wird durch Hydrozyklonierung und Zentrifugierung in eine Fraktion plus 0,05 mm und eine Fraktion minus 0,05 mm getrennt. Die Fraktion minus 0,05 mm wird durch Ausflockung und Zentrifugierung in Feststoff und Waschflüssigkeit getrennt, die wieder in den Trommelwäscher und die Siebung geleitet wird.

Aus der US-A-4 336 136 ist ein Verfahren bekannt, wobei ebenfalls eine Reinigung in einer Trommel erfolgt und die Waschlösung NaOH enthält. Die Behandlung in der Trommel erfolgt unter Einleitung von Dampf. Die Umdrehungsgeschwindigkeit der Trommel beträgt 1 U/min. Ein voller Behandlungszyklus besteht aus 8 Umdrehungen der Trommel. Der Austrag wird durch Siebung in eine grobe und eine feine Fraktion getrennt. Die grobe Fraktion und die vor dem Einsatz in die Trommel abgetrennte sehr grobe Fraktion werden mit einem Siebkorb in ein Lösungsmittel getaucht und dort gereinigt. Aus der feinkörnigen Fraktion wird durch Einleiten von Dampf und Luft das Öl abgelöst und von der Oberfläche abgestreift. Die abgetrennten Feststoffe enthalten noch etwa 30% des eingebrachten Öls und werden in eine Flotation geleitet. Zur Entfernung des restlichen Öls werden in die Flotation Fettsäuren oder Alkohole wie Mono- und/oder Dimethylphenole (cresylic acids), Eukalyptusöle, Pineöle, Alkyläther, Phenyläther von Propylen, oder Glykole als Schäumer zugesetzt. Die an den Schaum gebundenen Ölpartikel werden mit den Schaum ausgetragen und dann aus dem Schaum abgeschieden.

Bei den vorstehend aufgeführten Verfahren kann durch die Verwendung der alkalischen Dispersionslösungen nicht ausgeschlossen werden, daß chemische Reaktionen mit Bestandteilen des Bodens auftreten. Außerdem enthält auf jeden Fall der gereinigte Boden einen Anteil dieser Natronlauge.

Die US-A-4 783 263 beschreibt ein Verfahren, bei dem nach Entfernen von Fremdobjekten durch Brechen und Sieben ein physikalisch gleichmäßiges Material in einen Tank chargiert und durch Rühren unter Zusatz von Tensiden und/oder alkalischen Reagenzien in eine Schlammphase gebracht wird. Die Tenside und/oder alkalischen Reagenzien bewirken eine Desorption oder anderweitige Entfernung der Verunreinigungen von den festen Partikeln und bringen die Verunreinigungen in die flüssige Phase des Schlammes. Anschließend erfolgt eine mehrstufige Flotation im Gegenstrom zu einem zugegebenen Sammler. Der Sammler und die Verunreinigungen werden als Schadstoffkonzentrat abgeführt, während der aus der letzten Flotationszelle ausgetragene Feststoff nach einer Eindickung und eventuellen Filtration als gereinigter Boden abgeführt wird. Aus der anfallenden Flüssigkeit wird organisches Material durch Absorption an Kohlenstoff, Ionenaustausch oder umgekehrte Osmose entfernt.

Aus der DE-A-38 15 461 ist ein Verfahren bekannt, bei dem die kontaminierten Böden in einer Trommel unter Zusatz von losen Brocken nach Art von Mahlkörpern mit einer Netto-Energieaufnahme von 4 bis 16 kWh/t Durchsatz agitiert werden, wobei die Drehzahl 50-90% der kritischen Drehzahl von

$$n_{krit} = \frac{42,4}{\sqrt{D}} \ (min^{-1})$$

beträgt, die aus der Trommel ausgetragene wässrige Aufschlämmung durch Siebung in eine gröbere und eine feinere Fraktion getrennt wird, die gröbere Fraktion als gereinigte Fraktion abgeführt, die feinere Fraktion entschlämmt, der abgetrennte Schlamm nach einer Entwässerung als Schadstoffkonzentrat abgeführt und der entschlämmte Rest der feineren Fraktion nach einer Entwässerung als gereinigter Boden abgeführt wird. Eine Variante besteht darin, daß die Agitation in der Trommel mit einer Netto-Energieaufnahme von 1 bis 6 kWh/t Durchsatz erfolgt und der nach der Entschlämmung verbleibende Rest der feineren Fraktion in einer zweiten Trommel unter Zusatz von losen Brocken nach Art von Mahlkörpern mit einer Netto-Energieaufnahme von 4 bis 16 kWh/t Durchsatz agitiert wird, die aus der zweiten Trommel ausgetragene wässrige Aufschlämmung entschlämmt, der abgetrennte Schlamm nach einer Entwässerung als Schadstoffkonzentrat abgeführt und der entschlämmte zweite Rest der feineren Fraktion nach einer Entwässerung als gereinigter Boden abgeführt wird. Der entschlämmte Rest der feineren Fraktion wird in beiden Verfahrensvarianten vorzugsweise in einer Flotation unter Zusatz von Sammlern behandelt, das Schaumprodukt als Schadstoffkonzentrat und der Unterlauf nach der Entwässerung als gereinigter Boden abgeführt. Die Absiebung der wässrigen Aufschlämmung in eine gröbere und eine feinere Fraktion erfolgt mit einem Siebschnitt von etwa 1-2 mm. Die gröbere Fraktion kann in zwei Fraktionen getrennt werden, wobei der Siebschnitt bei etwa 6 mm liegt. Die mittlere Fraktion kann separat aufgearbeitet werden, z.B. durch Zugabe in die zweite Trommel. Dieses Verfahren ermöglicht die Konzentration eines großen Teiles der Verunreinigungen in einem relativ kleinen Teil der Böden und die Wiederverwendung des dekontaminierten Teiles der Böden. Da die Verunreinigungen an den feinkörnigen, festen Teilchen angelagert und nicht im Wasser gelöst werden, und da die wässrige Phase im Kreislauf geführt wird, entsteht kein Abwasserproblem.

Der Erfindung liegt die Aufgabe zugrunde, die Dekontaminierung des gereinigten Teiles der Böden noch weiter zu verbessern.

Die Lösung dieser Aufgabe erfolgt erfindungsgemäß dadurch, daß in die selektive Flotation ein emulgiertes, pflanzliches, öliges Fett als Sammler eingesetzt und daß in die wäßrige Feinkornfraktion vor dem Einsatz in die selektive Flotation ein pflanzliches, öliges Fett als Konditionierungsmittel eingerührt wird.

Der Ausdruck "pflanzliches, öliges Fett" wird für pflanzliche Fette verwendet, die bei der Arbeitstemperatur der selektiven Flotation flüssig sind und eine niedrige Viskosität haben. Besonders geeignet sind Rapsöl, Rüböl, Sojaöl, Sonnenblumenöl, Erdnußöl, Palmöl, Olivenöl, Baumwollsaatöl, Sesamöl und Leinöl. Es können auch modifizierte Öle, wie z.B. Rapsöl-Methylester, verwendet werden. Die Verwendung dieser pflanzlichen, öligen Fette ergibt sehr gute Flotationsergebnisse, und auch die im gereinigten Boden verbleibenden geringen Mengen des Sammlers bestehen aus natürlichen, abbaubaren und ökologisch unbedenklichen Stoffen.

Eine vorzugsweise Ausgestaltung besteht darin, daß als Emulgatoren leicht abbaubare und/oder ökologisch unbedenkliche Stoffe verwendet werden. Solche Stoffe sind z.B. Vitamin E, Sulfonamido-Carbonsäure und ethoxilierte Glycerin-Fettsäure-Ester. Dadurch bestehen auch die geringen Reste des Emulgators, die im gereinigten Boden verbleiben, aus natürlichen, abbaubaren und ökologisch unbedenklichen Stoffen.

Das Konditionierungsmittel wird durch Einrühren in der Feinkornfraktion dispergiert. Vorzugsweise wird das gleiche pflanzliche, ölige Fett verwendet, das als Sammler in der Flotation verwendet wird. Das Konditionierungsmittel kann auch emulgiert werden. Durch die Konditionierung wird das Ergebnis der selektiven Flotation beträchtlich verbessert, auch wenn als Konditionierungsmittel und Sammler die gleichen Stoffe verwendet werden.

Eine weitere Lösung der Aufgabe erfolgt erfindungsgemäß dadurch, daß in die selektive Flotation ein emulgiertes mineralisches Leichtöl als Sammler eingesetzt wird, und in die Feinkornfraktion vor dem Einsatz in die selektive Flotation ein mineralisches Leichtöl als Konditionierungsmittel eingerührt wird. Als mineralisches Leichtöl werden insbesondere Dieselöl oder leichtes Heizöl verwendet. Das Konditionierungsmittel wird durch Einrühren in der Feinkornfraktion dispergiert. Es wird zweckmäßigerweise in emulgierter Form eingesetzt. Durch die vorherige Konditionierung wird das Ergebnis der selektiven Flotation beträchtlich verbessert, auch wenn die gleichen Stoffe verwendet werden.

Eine vorzugsweise Ausgestaltung besteht darin, daß die Einwirkzeit des Konditionierungsmittels 2 bis 20 min beträgt. Diese Einwirkzeit bewirkt eine wesentliche Verbesserung der selektiven Flotation.

Eine vorzugsweise Ausgestaltung besteht darin, daß das Leichtöl in einer Menge von 50-1000 g/t Feststoff zugegeben wird. Dadurch wird eine wesentliche Verbesserung der selektiven Flotation erzielt.

Eine vorzugsweise Ausgestaltung besteht darin, daß in der selektiven Flotation ein Schäumer zugegeben wird. Als Schäumer kann z.B. modifiziertes Pineoil mit gutem Erfolg eingesetzt werden. Dadurch werden sehr gute selektive Flotationsergebnisse erzielt.

3

Das erfindungsgemäße Verfahren eignet sich insbesondere in Verbindung mit dem Verfahren der eingangs geschilderten DE-A-38 15 461.

Eine vorzugsweise Ausgestaltung besteht darin, daß eine Grobkornfraktion mit einem Korngrößenbereich von 1 bis 30 mm abgetrennt wird und aus der Grobkornfraktion feste, verbrennbare Bestandteile durch gravimetrische Sortierung entfernt werden. Je nach Beschaffenheit der Böden kann die untere Grenze etwas höher und die obere Grenze etwas niedriger gelegt werden. Bei der gravimetrischen Sortierung wird das Material durch hydrodynamische Kraftwirkung aufgelockert, und es vollzieht sich eine Schichtung nach der Dichte. Dadurch ordnen sich im Setzbett die spezifisch leichteren Körner über den spezifisch schwereren ein, so daß eine Schichtfolge entsteht, deren Dichte von unten nach oben abnimmt und die mit Hilfe von Austragsvorrichtungen in Produkte verschiedener Qualität getrennt werden kann. Die gravimetrische Sortierung kann z.B. auf pulsierenden Setzmaschinen, Schüttelherden oder Wendelscheidern erfolgen. Das abgetrennte Leichtgut hat ein spezifisches Gewicht von etwa $< 1,8$ g/cm$^3$. Das Leichtgut besteht hauptsächlich aus Kohle, Holz, Pflanzenresten und evtl. Papier. Diese Stoffe adsorbieren einen Großteil der im Boden enthaltenden Schadstoffe. Das Leichtgut wird verbrannt, deponiert oder anderweitig entsorgt.

Eine vorzugsweise Ausgestaltung besteht darin, daß der kontaminierte Boden in einer Trommel unter Zusatz von losen Brocken nach Art von Mahlkörpern mit einer Netto-Energieaufnahme von 1 bis 6 kWh/t Durchsatz behandelt wird, wobei die Drehzahl 50 bis 90% der kritischen Drehzahl von

$$n_{krit} = \frac{42,4}{\sqrt{D}} \ (min^{-1})$$

beträgt, aus der aus der Trommel ausgetragenen wässrigen Aufschlämmung eine Grobkornfraktion mit einem Korngrößenbereich von 1-30 mm und eine Feinkornfraktion abgetrennt werden, die Grobkornfraktion durch gravimetrische Sortierung in eine Leichtgutfraktion, welche die festen, verbrennbaren Bestandteile enthält und eine dekontaminierte Schwergutfraktion getrennt wird, die Feinkornfraktion in einer zweiten Trommel unter Zugabe von losen Brocken mit einer Netto-Energieaufnahme von 4 bis 16 kWh/t Durchsatz behandelt wird, wobei die Drehzahl 50-90% der kritischen Drehzahl von

$$n_{krit} = \frac{42,4}{\sqrt{D}} \ (min^{-1})$$

beträgt, die aus der zweiten Trommel ausgetragene zweite wässrige Aufschlämmung in der selektiven Flotation behandelt wird, das Schaumprodukt nach einer Entwässerung als Schadstoffkonzentrat abgeführt wird, und der Unterlauf nach einer Entwässerung als gereinigter Boden abgeführt wird. Die Zugabe des Konditionierungsmittels vor der Flotation erfolgt hier zweckmäßigerweise in die zweite Trommel. Das Konditionierungsmittel kann grundsätzlich auch in die erste Trommel eingegeben werden. Dabei erfolgt jedoch ein höherer Verbrauch durch Anlagerung an der Grobfraktion. Die Flotation erfolgt zweckmäßigerweise zwei- oder mehrstufig. Die Schaumprodukte der Flotationszellen werden in einem Lamellenklärer eingedickt, der Überlauf als Prozeßwasser zurückgeführt und der Unterlauf in einem Eindicker weiter eingedickt. Der Überlauf dieses Eindickers wird als Prozeßwasser zurückgeführt und der Unterlauf in einem Plattenfilter entwässert und als Schadstoffkonzentrat abgeführt. Der Unterlauf der Flotationszellen wird ebenfalls in einem Lamellenklärer eingedickt, der Überlauf als Prozeßwasser zurückgeführt und der Unterlauf auf einem Bandfilter weiter entwässert und als Reinboden abgeführt. Im allgemeinen muß dem Prozeß Frischwasser zugeführt werden.

Falls jedoch der kontaminierte Boden einen sehr hohen Feuchtegehalt aufweist, kann das Filtrat des Plattenfilters in einfacher Weise aufbereitet werden, da es keine toxischen Stoffe in gelöster Form enthält. Falls im Kreislauf der wässrigen Phase eine Anreicherung von gelösten Salzen auftritt, kann das Filtrat des Plattenfilters gereinigt und dann wieder zurückgeführt werden. Der Ausdruck "Böden" wird für alle Materialien verwendet, die sich durch das Verfahren aufbereiten lassen, z.B. auch für Halden. Die Böden werden je nach Beschaffenheit vor dem Einsatz in die Trommel durch eine Schrott- und Steinabscheidung geleitet. Die maximale Korngröße für das Einsatzmaterial beträgt etwa 200 mm. Die Netto-Energieaufnahme der Trommel ist die auf den Trommelmantel übertragene Energie, d.h. die Energieaufnahme der Trommel in gefülltem Zustand minus der Energieaufnahme im Leerzustand. Die Netto-Energieaufnahme ist auf den Durchsatz an trockenem Boden bezogen. Der optimale Wert für die Energieaufnahme im erfindungsgemäßen Bereich richtet sich nach der Art des Bodens und der Verunreinigungen. Er wird empirisch ermittelt. Vorzugsweise liegt die untere Grenze der Energieaufnahme über 6 kWh/t Durchsatz, da dann im allgemeinen bessere Ergebnisse erzielt werden. "D" ist der Durchmesser der Trommel in Metern. Die Behandlung des Bodens in der Trommel erfolgt derart, daß ein starker Abrieb der Oberflächen der Körner erfolgt. Bei der dazu erforderlichen Energieaufnahme erfolgt zwangsläufig auch eine gewisse Kornzerkleinerung. Der Siebschnitt richtet sich ebenfalls nach der Art des Bodens und der Verunreinigungen und wird empirisch ermittelt. Das wäßrige Medium in der Trommel besteht im allgemeinen aus Wasser, vorzugsweise aus rückgeführtem Wasser aus nachfolgenden Stufen des Verfahrens. Die Siebung erfolgt zweckmäßigerweise auf einem Schwingsieb unter Besprühen mit rückgeführtem Wasser und/oder Frischwasser. Das Schwingsieb kann vom groben Korn durch vorherige Absiebung, z.B. durch einen am Austrag der Trommel angeordneten Siebkorb, entlastet werden. Die "Brocken nach Art von Mahlkörpern" können aus arteigenem und/oder nicht-arteigenem natürlichen und/oder künstlichen Material oder aus Stahlkugeln bestehen.

Eine vorzugsweise Ausgestaltung besteht darin, daß die nach der ersten Trommel aus der wässrigen Aufschlämmung abgetrennte Feinkornfraktion entschlämmt wird, der entschlämmte Rest der Feinkornfraktion in die zweite Trommel eingesetzt wird und die aus der zweiten Trommel ausgetragene zweite wässrige Aufschlämmung mit dem abgetrennten Schlamm in die selektive Flotation eingesetzt wird. Die Entschlämmung erfolgt zweckmäßigerweise durch Hydrozyklonierung. Dadurch wird erreicht, daß die Atrition der Feinkornfraktion in der zweiten Trommel in Abwesenheit der Schlammfraktion erfolgt. Dies ist insbesondere von Vorteil, wenn die Schlammfraktion sehr stark kontaminiert ist.

Eine vorzugsweise Ausgestaltung besteht darin, daß in der wässrigen Aufschlämmung aus der ersten Trommel vorliegendes Überkorn mit einer Korngröße oberhalb der abgetrennten Grobkornfraktion in einem Brecher zerkleinert und danach wieder in die erste Trommel zurückgeführt wird. Dadurch wird die Reinheit des aus der abgetrennten Grobkornfraktion abgeschiedenen Schwergutes nochmals verbessert.

Die Erfindung wird anhand von Flotationsversuchen der Feinkornfraktion erläutert.

Versuch 1:

Die Flotation erfolgte unter Verwendung von Dieselöl als Sammler in der Flotation. Das Dieselöl wurde in Wasser emulgiert und als Emulsion in die Flotation eingesetzt.

|  | Mengen-Ausbringen (%) | C-Gehalt (%) | C-Verteilg. (%) | PAK-Gehalt (ppm) | PAK-Verteilg. (%) |
|---|---|---|---|---|---|
| Schaum | 30,0 | 15,1 | 69,3 | 3900,0 | 97,7 |
| Abgang | 70,0 | 2,6 | 30,7 | 35,6 | 2,3 |
| Aufgabe | 100,0 | 6,1 | 100,0 | 1116,5 | 100,0 |

Versuch 2:

Die Flotation erfolgte unter den gleichen Bedingungen wie in Versuch 1, jedoch erfolgte eine Konditionierung der wäßrigen Feinkornfraktion vor dem Einsatz in die Flotation durch Zusatz von 880 g Dieselöl pro 1000 kg Feststoff. Das Konditionierungsmittel wurde in die zweite Trommel zugegeben. Die Einwirkzeit betrug 8 min.

|  | Mengen-Ausbringen (%) | C-Gehalt (%) | C-Verteilg. (%) | PAK-Gehalt (ppm) | PAK-Verteilg. (%) |
|---|---|---|---|---|---|
| Schaum | 25,7 | 19,2 | 77,7 | 4300,0 | 99,1 |
| Abgang | 74,3 | 1,9 | 22,3 | 14,1 | 0,9 |
| Aufgabe | 100,0 | 6,3 | 100,0 | 1115,8 | 100,0 |

Versuch 3:

Die Flotation erfolgte unter Verwendung von Rapsöl als Sammler in der Flotation. Vor dem Einsatz in die Flotation erfolgte eine Konditionierung der wäßrigen Feinkornfraktion durch Zusatz von 880 g Rapsöl pro 1000 kg Feststoff. Das Konditionierungsmittel wurde in die zweite Trommel zugegeben. Die Einwirkzeit betrug 8 min.

|  | Mengen-Ausbringen (%) | C-Gehalt (%) | C-Verteilg. (%) | PAK-Gehalt (ppm) | PAK-Verteilg. (%) |
|---|---|---|---|---|---|
| Schaum | 24,7 | 21,2 | 83,3 | 4492,3 | 99,5 |
| Abgang | 75,3 | 1,4 | 16,7 | 8,2 | 0,5 |
| Aufgabe | 100,0 | 6,3 | 100,0 | 1115,8 | 100,0 |

Versuch 4:

Es wurde ein anderer Boden in einer ersten Trommel behandelt, der Austrag bei 1 mm in eine Grobfraktion und eine Feinfraktion abgesiebt, die Grobfraktion einer gravimetrischen Sortierung unterworfen, die Feinfraktion in einer zweiten Trommel behandelt und der Austrag in die Flotation eingesetzt. Die Flotation erfolgte unter Verwendung einer Rapsöl-Emulsion als Sammler in der Flotation.

|  | Mengen-Ausbringen (%) | C-Gehalt (%) | C-Verteilg. (%) | PAK-Gehalt (ppm) | PAK-Verteilg. (%) |
|---|---|---|---|---|---|
| **nach der ersten Trommel** | | | | | |
| > 1 mm | 27,2 | 9,4 | 36,6 | 63 | 31,2 |
| < 1 mm | 72,8 | 6,1 | 63,4 | 51 | 68,8 |
| Rohboden | 100,0 | 7,0 | 100,0 | 54 | 100,0 |
| **Flotation der Feinkornfraktion** | | | | | |
| Schaum | 19,7 | 12,1 | 34,1 | 129 | 47,2 |
| Abgang | 53,1 | 3,8 | 29,3 | 22 | 21,6 |
| < 1 mm | 72,8 | 6,1 | 63,4 | 51 | 68,8 |
| **gravimetrische Sortierung der Grobkornfraktion** | | | | | |
| Leichtgut | 4,9 | 47,7 | 33,4 | 347 | 31,0 |
| Schwergut | 22,3 | 1,0 | 3,2 | 0,6 | 0,2 |
| > 1 mm | 27,2 | 9,4 | 36,6 | 63 | 31,2 |

Versuch 5:

Der Boden aus Versuch 4 wurde unter den gleichen Bedingungen wie in Versuch 4 behandelt, jedoch erfolgte durch Zugabe von 500 g Rapsöl pro 1000 kg Feststoff in die zweite Trommel eine Konditionierung der Feinkornfraktion vor dem Einsatz in die Flotation. Die Einwirkzeit betrug 8 min.

| | Mengen-Ausbringen (%) | C-Gehalt (%) | C-Verteilg. (%) | PAK-Gehalt (ppm) | PAK-Verteilg. (%) |
|---|---|---|---|---|---|
| **nach der ersten Trommel** | | | | | |
| > 1 mm | 27,2 | 9,4 | 36,9 | 63 | 31,5 |
| < 1 mm | 72,8 | 6,0 | 63,1 | 51 | 68,5 |
| Rohboden | 100,0 | 6,9 | 100,0 | 54 | 100,0 |
| **Flotation der Feinkornfraktion** | | | | | |
| Schaum | 13,4 | 27,7 | 53,7 | 237 | 58,6 |
| Abgang | 59,4 | 1,1 | 9,4 | 9 | 9,9 |
| < 1 mm | 72,8 | 6,0 | 63,1 | 51 | 68,5 |
| **gravimetrische Sortierung der Grobkornfraktion** | | | | | |
| Leichtgut | 4,9 | 47,7 | 33,7 | 347 | 31,3 |
| Schwergut | 22,3 | 1,0 | 3,2 | 0,6 | 0,2 |
| > 1 mm | 27,2 | 9,4 | 36,9 | 63 | 31,5 |

**Patentansprüche**

1. Verfahren zur Aufbereitung von kontaminierten Böden durch Trennen einer wäßrigen Aufschlämmung des Bodens in Grobkorn- und Feinkornfraktion, Behandlung der Feinkornfraktion in einer Flotation. Entwässerung des Schaumproduktes und Abführung als Schadstoffkonzentrat, und Entwässerung des Unterlaufes der Flotation und Abführung als gereinigter Boden, dadurch gekennzeichnet, daß in die selektive Flotation ein emulgiertes, pflanzliches, öliges Fett als Sammler eingesetzt wird und in die Feinkornfraktion vor dem Einsatz in die selektive Flotation ein pflanzliches, öliges Fett als Konditionierungsmittel eingerührt wird.

2. Verfahren nach Anspruch 1, dadurch gekennzeichnet, daß als Emulgatoren leicht abbaubare und/oder ökologisch unbedenkliche Stoffe verwendet werden.

3. Verfahren zur Aufbereitung von kontaminierten Böden durch Trennen einer wäßrigen Aufschlämmung des Bodens in Grobkorn- und Feinkornfraktion, Behandlung der Feinkornfraktion in einer Flotation. Entwässerung des Schaumproduktes und Abführung als Schadstoffkonzentrat, und Entwässerung des Unterlaufes der Flotation und Abführung als gereinigter Boden, dadurch gekennzeichnet, daß in die selektive Flotation ein emulgiertes mineralisches Leichtöl als Sammler eingesetzt wird, und in die Feinkornfraktion vor dem Einsatz in die selektive Flotation ein mineralisches Leichtöl als Konditionierungsmittel eingerührt wird.

**4.** Verfahren nach einem der Ansprüche 1 bis 3, dadurch gekennzeichnet, daß die Einwirkzeit des Konditionierungsmittels vor der Flotation 2 bis 20 min beträgt.

**5.** Verfahren nach einem der Ansprüche 1 bis 4, dadurch gekennzeichnet - daß das Konditionierungsmittel in einer Menge von 50 bis 1000 g/t Feststoff zugesetzt wird.

**6.** Verfahren nach einem der Ansprüche 1 bis 5, dadurch gekennzeichnet, daß in der selektiven Flotation ein Schäumer zugegeben wird.

**7.** Verfahren nach einem der Ansprüche 1 bis 6, dadurch gekennzeichnet, daß eine Grobkornfraktion mit einem Korngrößenbereich von 1 bis 30 mm abgetrennt wird und aus der Grobkornfraktion feste, verbrennbare Bestandteile durch gravimetrische Sortierung entfernt werden.

**8.** Verfahren nach einem der Ansprüche 1 bis 7, dadurch gekennzeichnet, daß der kontaminierte Boden in einer Trommel unter Zusatz von losen Brocken nach Art von Mahlkörpern mit einer Netto-Energieaufnahme von 1 bis 6 kWh/t Durchsatz behandelt werden, wobei die Drehzahl 50-90% der kritischen Drehzahl von

$$n_{krit} = \frac{42,4}{\sqrt{D}} \ (min^{-1})$$

beträgt, aus der aus der Trommel ausgetragenen wässrigen Aufschlämmung eine Grobkornfraktion mit einem Korngrößenbereich von 1 bis 30 mm und eine Feinkornfraktion abgetrennt werden, die Grobkornfraktion durch gravimetrische Sortierung in eine Leichtgutfraktion, welche die festen, verbrennbaren Bestandteile enthält, und eine dekontaminierte Schwergutfraktion getrennt wird, die Feinkornfraktion in einer zweiten Trommel unter Zugabe von losen Brocken mit einer Netto-Energieaufnahme von 4 bis 16 kWh/t Durchsatz behandelt wird, wobei die Drehzahl 50-90% der kritischen Drehzahl von

$$n_{krit} = \frac{42,4}{\sqrt{D}} \ (min^{-1})$$

beträgt, die aus der zweiten Trommel ausgetragene zweite wässrige Aufschlammung in einer Flotation behandelt wird, das Schaumprodukt nach einer Entwässerung als Schadstoffkonzentat abgeführt und der Unterlauf nach einer Entwässerung als gereinigter Boden abgeführt wird.

**9.** Verfahren nach Anspruch 8, dadurch gekennzeichnet, daß die nach der ersten Trommel aus der wässrigen Aufschlämmung abgetrennte Feinkornfraktion entschlämmt wird, der entschlämmte Rest der Feinkornfraktion in die zweite Trommel eingesetzt und die aus der zweiten Trommel ausgetragene zweite wässrige Aufschlämmung mit dem abgetrennten Schlamm in die selektive Flotation eingesetzt wird.

**10.** Verfahren nach Anspruch 8 oder 9, dadurch gekennzeichnet, daß in der wässrigen Aufschlammung aus der Trommel vorliegendes Überkorn mit einer Korngröße oberhalb der abgetrennten Grobkornfraktion in einem Brecher zerkleinert und danach wieder in die erste Trommel zurückgeführt wird.

**Claims**

**1.** A method for dressing contaminated soils by separation of an aqueous slurry of the soil into a coarse-grain and a fine-grain fraction, treatment of the fine-grain fraction in a flotation stage, dewatering of the froth product and removal as a pollutant concentrate, and dewatering of the bottom fraction of the flotation stage and removal as purified soil, characterised in that an emulsified vegetable, oily fat is introduced into the selective flotation stage as a collector, and a vegetable, oily fat is stirred into the fine-grain fraction as a conditioning agent before introduction into the selective flotation stage.

2. A method according to Claim 1, characterised in that readily degradable and/or ecologically harmless substances are used as emulsifiers.

3. A method for dressing contaminated soils by separation of an aqueous slurry of the soil into a coarse-grain and a fine-grain fraction, treatment of the fine-grain fraction in a flotation stage, dewatering of the froth product and removal as a pollutant concentrate, and dewatering of the bottom fraction of the flotation stage and removal as purified soil, characterised in that an emulsified mineral light oil is introduced into the selective flotation stage as a collector, and a mineral light oil is stirred into the fine-grain fraction as a conditioning agent before introduction into the selective flotation stage.

4. A method according to one of Claims 1 to 3, characterised in that the exposure time of the conditioning agent before the flotation stage is 2 to 20 minutes.

5. A method according to one of Claims 1 to 4, characterized in that the conditioning agent is added in a quantity of 50 to 1000 g/tonne solids.

6. A method according to one of Claims 1 to 5, characterized in that a foaming agent is added to the selective flotation stage.

7. A method according to one of Claims 1 to 6, characterized in that a coarse-grain fraction having a grain size range of 1 to 30 mm is separated off and solid, combustible constituents are removed from the coarse-grain fraction by gravimetric sorting.

8. A method according to one of Claims 1 to 7, characterized in that the contaminated soil is treated in a drum with the addition of loose chunks acting in the manner of grinding bodies with a net energy input of 1 to 6 kWh/tonne throughput, the speed of rotation being 50-90% of the critical speed of

$$n_{crit} = \frac{42.4}{\sqrt{D}} \, (min^{-1})$$

a coarse-grain fraction having a grain size range of 1 to 30 mm and a fine-grain fraction are separated out of the aqueous slurry discharged from the drum, the coarse-grain fraction is separated by gravimetric sorting into a light-material fraction which contains the solid, combustible constituents, and a decontaminated heavy-material fraction, the fine-grain fraction is treated in a second drum with the addition of loose chunks with a net energy input of 4 to 16 kWh/tonne throughput, the speed of rotation being 50-90% of the critical speed of

$$n_{crit} = \frac{42.4}{\sqrt{D}} \, (min^{-1})$$

the second aqueous slurry discharged from the second drum is treated in a flotation stage, the froth product is removed as a pollutant concentrate after dewatering and the bottom fraction is removed as purified soil after dewatering.

9. A method according to Claim 8, characterised in that the fine-grain fraction separated out of the aqueous slurry after the first drum is desludged, the desludged remainder of the fine-grain fraction is introduced into the second drum and the second aqueous slurry discharged from the second drum is introduced, with the sludge which has been separated off, into the selective flotation stage.

10. A method according to Claim 8 or 9, characterised in that oversize having a grain size greater than the coarse-grain fraction which has been separated off, and which is located in the aqueous slurry from the drum, is crushed in a crusher and then recycled into the first drum.

**Revendications**

1. Procédé de traitement de sols pollués par séparation d'une suspension aqueuse du sol en une fraction à grains grossiers et en une fraction à grains fins, traitement de la fraction à grains fins par flottation, déshydratation de l'écume et évacuation en tant que concentré de substance polluante et déshydratation de la partie sous-jacente de la flottation et évacuation en tant que sol épuré, caractérisé en ce qu'il consiste à utiliser dans la flottation sélective, comme collecteur, une graisse huileuse végétale émulsionnée et à mélanger à la fraction à grains fins, avant l'utilisation dans la flottation sélective, une graisse huileuse végétale en tant qu'agent de conditionnement.

2. Procédé suivant la revendication 1, caractérisé en ce qu'il consiste à utiliser comme émulsionnants des substances pouvant se décomposer facilement et/ou inoffensives du point de vue écologique.

3. Procédé de traitement de sols pollués par séparation d'une suspension aqueuse du sol en une fraction à grains grossiers et en une fraction à grains fins, traitement de la fraction à grains fins par flottation, déshydratation de l'écume et évacuation en tant que concentré de substance polluante et déshydratation de la partie sous-jacente de la flottation et évacuation en tant que sol épuré, caractérisé en ce qu'il consiste à utiliser dans la flottation sélective, comme collecteur, une huile minérale légère émulsionnée et à mélanger à la fraction à grains fins, avant l'utilisation dans la flottation sélective, une huile minérale légère en tant qu'agent de conditionnement.

4. Procédé suivant l'une des revendications 1 à 3, caractérisé en ce que la durée d'action de l'agent de conditionnement avant la flottation est comprise entre 2 et 20 minutes.

5. Procédé suivant l'une des revendications 1 à 4, caractérisé en ce qu'il consiste à ajouter l'agent de conditionnement en une quantité de 50 à 100 g/t de matières solides.

6. Procédé suivant l'une des revendications 1 à 5, caractérisé en ce qu'il consiste à ajouter un agent moussant dans la flottation sélective.

7. Procédé suivant l'une des revendications 1 à 6, caractérisé en ce qu'il consiste à séparer une fraction à grains grossiers d'une plage granulométrique de 1 à 30 mm, et à éliminer de la fraction à grains grossiers par triage gravimétrique, des constituants solides ou combustibles.

8. Procédé suivant l'une des revendications 1 à 7, caractérisé en ce qu'il consiste à traiter le sol pollué dans un tambour avec admission de morceaux lâches à la façon de corps de broyage, avec une absorption nette d'énergie de 1 à 6 kWh/t de débit, la vitesse de rotation représentant de 50 à 90 % de la vitesse de rotation critique de

$$n_{critique} = \frac{42,4}{\sqrt{D}} \ (mn^{-1})$$

à séparer de la suspension aqueuse déchargée du tambour une fraction à grains grossiers ayant une plage granulométrique de 1 à 30 mm et une fraction à grains fins, à séparer la fraction à grains grossiers par triage gravimétrique on une fraction légère, qui contient les constituants combustibles solides et en une fraction Lourde dépolluée, à traiter la fraction grossière dans un deuxième tambour par addition de morceaux lâches avec une absorption d'énergie nette de 4 à 16 kWh/t de débit, la vitesse de rotation représentant de 50 à 90 % de la vitesse de rotation critique de

$$n_{critique} = \frac{42,4}{\sqrt{D}} \ (mn^{-1})$$

à traiter la deuxième suspension aqueuse déchargée du deuxième tambour dans une flottation, à évacuer l'écume après une déshydratation en tant que concentré de substances polluantes et à évacuer la partie sous-jacente après déshydratation en tant que sol épuré.

9. Procédé suivant la revendication 8, caractérisé en ce qu'il consiste à débourber la fraction à graine fins séparée après le premier tampon de la suspension aqueuse, à utiliser le résidu débourbé de la fonction à grains fins dans le deuxième tambour et à utiliser la deuxième suspension aqueuse déchargée du deuxième tambour avec la boue séparée dans la flottation sélective.

10. Procédé suivant la revendication 8 ou 9, caractérisé en ce qu'il constate à fractionner dans un concasseur le refus supérieur présent dans la suspension aqueuse sortant du tambour et ayant une granulométrie supérieure à la fraction à grains grossiers séparés et ensuite à le retourner au premier tambour.